# EUROPEAN PATENT SPECIFICATION

(11) **EP 2 741 621 B1**
(45) Date of publication and mention of the grant of the patent: **06.07.2016**
(21) Application number: 12710835.5
(22) Date of filing: 09.03.2012
(51) Int. Cl.: A23L 2/385, A23L 2/52, A23L 2/68, A23L 2/56

(54) **SHELF STABLE, LOW WATER LIQUID BEVERAGE CONCENTRATES**
LAGERSTABILE FLÜSSIGE GETRÄNKEKONZENTRATE MIT NIEDRIGEM WASSERANTEIL
CONCENTRÉS LIQUIDES DE BOISSON À FAIBLE TENEUR EN EAU STABLES EN CONSERVATION

(30) Priority: 12.08.2011 US 201161523085 P
(43) Date of publication of application: 18.06.2014
(73) Proprietor: Kraft Foods Group Brands LLC, Northfield, IL 60093 (US)
(72) Inventor: ZELLER, Bary Lyn, Glenview, Illinois 60025 (US); TOPINKA, John P., Evanston, Illinois 60202 (US); RAGNARSSON, Karl, Chester, New York 10918 (US); KYSER, Dale Anthony, Vernon Hills, Illinois 60061 (US)
(74) Representative: Boult Wade Tennant
(86) International application number: PCT/US2012/028472
(87) International publication number: WO 2013/025251

(56) References cited:
- WO-A2-2006/102435
- CA-A1- 2 748 983
- US-A1- 2009 041 911

## Description

### FIELD

The disclosure relates to shelf stable liquid beverage concentrates, and particularly to shelf stable, flavored, acidified beverage concentrates with low water content that are suitable for dilution with a potable liquid for preparing flavoured beverages.

### BACKGROUND

Flavored beverages are widely accepted by consumers and have increased in popularity in recent years. Flavored beverages are often prepared at home using powdered drink mixes, including commercially-available products like TANG®, CRYSTAL LIGHT®, and KOOL-AID® from Kraft Foods, to provide beverages in a variety of flavors, including fruit and tea flavors. Some drink mixes require the consumer to add sweetener, typically sucrose, when preparing the beverage. Other products that include sucrose often necessitate that relatively large amounts of the product be used to prepare each beverage. As the drink mixes are provided in dry form, the products generally have a long shelf life. Stability of the flavor ingredients is not a significant issue because beverages prepared with the drink mixes are typically consumed prior to the development of any off flavor notes in the beverage.

Flavored beverages may also be prepared from frozen, fruit-flavored concentrates, such as those traditionally sold in canisters. These concentrates typically include a large amount of water and are generally diluted at a ratio of 1 part concentrate to 3 parts water to provide the fruit flavoured beverage. These types of products are often susceptible to spoilage and require storage at freezer temperatures to provide the desired shelf life.

Ready-to-drink flavored water products have also increased in popularity with numerous commercial offerings. As these products are provided in diluted form and are formulated for direct consumption, there is no additional preparation required on the part of the consumer. While these types of products require no preparation time and may provide convenience to the consumer in that regard, these types of products are bulky due to the high water content.

US 20090041911 discloses methods of delivering a pre-measured, transparent, preservative-free, shelf-stable liquid drink concentrate that is readily miscible with any liquid medium without turbidity, precipitation or mechanical action for incorporation, and which produces a clear beverage resembling drinking water.

### Summary

The present invention provides a flavored liquid beverage concentrate having a low water content, the concentrate comprising:
5 to 50 weight percent acidulant;
0.5 to 40 weight percent flavoring;
0 to 30 weight percent water; and
non-aqueous liquid in an amount effective to provide a total non-aqueous liquid content of 20 to 94.5 by weight of the concentrate,
the amount of acidulant and flavoring included at a ratio by weight of at least 0:1:1, and for concentrates containing water, the acidulant and water are included in a ratio by weight of at least 0:25:1, and the flavored liquid beverage concentrate containing less dissociated acid and retaining more flavor than an otherwise identical concentrate including water instead of non-aqueous liquid after storage in a closed container at room temperature for at least three months.

Liquid beverage concentrates providing enhanced stability to flavor, artificial sweeteners, vitamins, and/or color ingredients are described herein. More particularly, liquid beverage concentrates described herein have a low water content (i.e., no more than 30 percent water) and are effective to provide enhanced flavor stability despite a high acidulant content (i.e., at least 5 percent acidulant by weight of the concentrate). In some aspects, the concentrates are substantially free of water. In some approaches, the liquid beverage concentrates disclosed herein remain shelf stable for at least three months when stored in a sealed container at room temperature (i.e., about 20° to about 25° C) and can be diluted to prepare flavored beverages with desired flavor profiles and with little or no flavor degradation.

The flavored liquid beverage concentrates provided herein include 5 percent to 50 percent acidulant, no more than 30 percent water, 0.5 to 40 percent flavoring, and non-aqueous liquid in an amount effective to provide a total non-aqueous liquid content of 20 to 94.5 percent by weight of the concentrate. For the concentrate containing water, the amounts of acidulant and water are included in a ratio of at least 0.25:1, i.e., with "at least" meaning increasing quantities of acidulant relative to water, such as a ratio of at least 0.5:1, in another aspect at least 1:1, in another aspect at least 2:1, in another aspect at least about 3:1, in another aspect at least about 4:1, in another aspect at least about 5:1, and in yet another aspect at least about 6:1. The acidulant and flavoring are included at a ratio of at least 0.1:1, i.e., with "at least" meaning increasing quantities of acidulant relative to flavoring, in another aspect at a ratio of at least 0.5:1, in another aspect at a ratio of at least 1:1, in another aspect at least about 1.5:1, and in yet another aspect at least 2:1.

As used herein, the phrase "low water" means that the concentrate includes no more than 30 percent water, in another aspect less than about 25 percent water, in another aspect less than 20 percent water, in another aspect less than 15 percent water, in another aspect less than 10 percent water, and in yet another aspect less than 5 percent water by weight of the concentrate. As used herein, "low water" can also refer to concentrates that are substantially free of water. As used herein, the phrases "substantially free of water," "non-aqueous," and "in the substantial absence of water" mean that the concentrates include less than about 2.5 percent water, in another aspect less than 1 percent water, in another aspect less than 0.5 percent water, and in yet another aspect about 0 percent water by weight of the concentrate.

Some flavorings, sweeteners, vitamins, and/or color ingredients are rapidly degraded in water or an acidic environment, thereby limiting the types of flavorings that are suitable for inclusion in water-based beverage concentrates or ready-to-drink beverages. For instance, some flavor degradation reactions require the presence of water while others require protons from dissociated acids. Advantageously, these types of ingredients can be included in the low water concentrates described herein and exhibit improved stability when stored at room temperature compared to otherwise identical concentrates having higher amounts of water.

In some approaches, the liquid concentrates provided herein include a substantial acidulant content. The concentrate includes 5 to 50 percent acidulant, in another aspect about 5 to about 40 percent acidulant, in another aspect about 5 to about 30 percent acidulant, and in yet another aspect about 7 to about 25 percent acidulant by weight of the concentrate.

In many applications, inclusion of acidulant in the concentrate so that a flavored beverage made therefrom has a tart flavor that enhances the overall flavor profile of the beverage. The concentrates described herein are provided at a substantial concentration such that small amounts of the concentrate are needed to provide flavor to a beverage upon dilution of the concentrate. For instance, the concentrate can be provided at a concentration of about 25 to about 500 times, in another aspect about 25 to about 225 times, in another aspect about 50 to about 200 times, in another aspect about 75 to about 160 times, and in yet another aspect about 90 to about 140 times that needed to provide a desired level of flavor intensity, acidity, and/or sweetness to a final beverage, which can be, for example, an 8 ounce beverage. By way of example, a concentration of 75 times (i.e., "75x") would be equivalent to 1 part concentrate to 74 parts water (or other potable liquid) to provide the final beverage.

It has been found that acidulants typically have lower acid dissociation constants (Kₐ) in organic liquids (such as non-aqueous liquids) than in water. The liquid beverage concentrates described herein beneficially exploit the lower acid dissociation constant of acidulants in non-aqueous liquids to reduce the effective acidity of liquid beverage concentrates containing large quantities of acidulants in order to improve the stability of flavor, artificial sweeteners, vitamins, and/or color ingredients. As such, the concentrates described herein include less dissociated acid than an otherwise identical concentrate including water instead of non-aqueous liquid.

In general, the relationship between the acidulant Kₐ value and the composition of liquid in which the acidulant is dissolved is logarithmic in nature. Therefore, replacing even small proportions of water with one or more NAL can produce very substantial reductions in the acidulant Kₐ value and extent of acid dissociation in a liquid mixture. For example, replacing about half the water in the concentrate with a non-aqueous liquid may reduce the acidulant Kₐ value and extent of acid dissociation in a liquid mixture by many hundred-fold, many thousand-fold, many million-fold, or more depending on the composition of the non-aqueous liquid(s) and the proportion (or absence) of water in the liquid mixture.

By virtue of balancing the amount of non-aqueous liquid, water, acidulant, and flavoring in the system, the liquid beverage concentrates described herein contains less dissociated acid and have less flavor degradation (for example, as can be analyzed by a trained flavor panel and/or analytical technique, such as HPLC) after at least three months storage at room temperature (in another aspect after six months storage at room temperature) in comparison to an otherwise identical concentrate including water instead of non-aqueous liquid.

By some approaches, the acidulant and flavor key of the flavoring are included in the concentrates in a ratio of 1:2 to 10,000:1, in another aspect 1:1 to 4000:1, in another aspect about 1.5:1 to about 300:1, and in another aspect about 2:1 to about 25:1. In some approaches, the acidulant and non-aqueous liquid can be provided in a ratio of about 1:19 to about 2.5:1, in another aspect about 1:16 to about 2:1, and in another aspect about 1:12 to about 1.5:1.

### Detailed Description

Liquid beverage concentrates providing enhanced stability to flavor, artificial sweeteners, vitamins, and/or color ingredients are described herein. More particularly, liquid beverage concentrates described herein provide enhanced flavor stability despite a high acidulant content (i.e., at least 5 percent acidulant by weight of the concentrate). In one aspect, the liquid beverage concentrates have a low water content (i.e., no more than 30 percent water) and, in another aspect, are substantially free of water. While the disclosure is primarily directed to the use of the liquid beverage concentrates for providing flavored beverages, use of the concentrates to provide flavor to a variety of food products is also contemplated. In some approaches, the liquid beverage concentrates disclosed herein remain shelf stable for at least three months and can be diluted to prepare flavored beverages with desired flavor profiles and with little or no flavor degradation.

As used herein, the term "concentrate" means a liquid composition that can be diluted with an aqueous, potable liquid to provide a beverage or added to a food product prior to being consumed. The phrase "liquid" refers to a non-gaseous, flowable, fluid composition at room temperature (i.e., about 20° to about 25° C). As used herein, the phrase "low water" means that the concentrate includes no more than 30 percent water, in another aspect less than about 25 percent water, in another aspect less than 20 percent water, in another aspect less than 15 percent water, in another aspect less than 10 percent water, and in yet another aspect less than 5 percent water by weight of the concentrate. As used herein, "low water" can also refer to concentrates that are substantially free of water. As used herein, the phrases "substantially free of water," "non-aqueous," and "in the substantial absence of water" mean that the concentrates include less than about 2.5 percent water, in another aspect less than 1 percent water, in another aspect less than 0.5 percent water, and in yet another aspect about 0 percent water by weight of the concentrate.

It has been found that inclusion of large amounts of water in liquid beverage concentrates can be problematic for a number of reasons, including, for example: (1) supporting growth of microbes, such as yeast, mold, and bacteria; (2) facilitating hydrolysis of flavor components and other unwanted chemical reactions; and (3) limiting the amount of flavoring or other ingredients that can be dissolved in the concentrate. Water content can also be problematic when acidulants are included in the concentrates due to lowering of pH and resulting instability of some ingredients at low pH.

Some flavorings, sweeteners, vitamins, and/or color ingredients are rapidly degraded in water or an acidic environment, thereby limiting the types of flavorings that are suitable for inclusion in water-based beverage concentrates or ready-to-drink beverages. For instance, some flavor degradation reactions require the presence of water while others require protons from dissociated acids. Certain types of flavorings, such as acid labile citrus flavorings containing terpenes and sesquiterpenes, have greater susceptibility to degradation, and products containing them typically have very short shelf lives (even a matter of days) when stored above refrigeration temperatures due to development of off-flavor notes and alteration of the taste profile of the product. Exemplary other ingredients exhibiting instability in water and/or at low pH include, for example, vitamins, particularly vitamins A, C, and E (Vitamin C, for example, can undergo browning in an acidic environment); high potency sweeteners (such as, for example, monatin, neotame, Luo Han Guo), "natural" colors or other non-exempt colors listed in the Federal Food, Drug, & Cosmetic Act (such as for example fruit and vegetable extracts, anthocyanins, copper chlorophyllin, curcumin, riboflavin), sucrose (susceptible to acid hydrolysis and browning), protein, hydrocolloids, starch, and fiber. These types of ingredients can advantageously be included in the low water concentrates described herein and exhibit improved stability when stored at room temperature compared to otherwise identical concentrates having higher amounts of water.

By "shelf stable" it is meant that the concentrate avoids substantial flavor degradation and is microbially stable such that the concentrate has an aerobic plate count (APC) of less than about 5000 CFU/g, yeast and mold at a level less than about 500 CFU/g, and coliforms at 0 MPN/g for at least about six months, in another aspect at least about eight months, in another aspect at least about ten months, and in yet another aspect at least about twelve months, when stored at room temperature in a sealed container. By some approaches, the low water concentrate is bactericidal and prevents germination of spores. In some approaches, "enhanced flavor stability" and "avoiding substantial degradation of flavor" means that the concentrates described herein retain more flavor after storage at room temperature over the shelf life of the product as compared to an otherwise identical concentrate including water instead of NAL. In other approaches, "enhanced flavor stability" and "avoiding substantial degradation of flavor" means that there is little change in flavor and development of off flavor in the concentrate when stored at room temperature over the shelf life of the product in a sealed container. For example, the change in flavor or development of off flavor notes can be analyzed by a trained flavor panel whereby the concentrate is diluted to provide a beverage and compared to a beverage prepared from an otherwise identical freshly prepared concentrate (i.e., within 24 hours and stored at room temperature in a sealed container). By another approach, the change in flavor or development of off flavor notes can be analyzed by a trained flavor panel whereby the concentrate is diluted to provide a beverage and compared to a beverage prepared from an identical concentrate stored in a sealed container in the frozen state throughout its shelf life. The concentrates can be evaluated on a 10 point scale, with a score of "1" being considered identical to control, "2-5" being slightly/moderately different than control, and "above 5" being unacceptably different from control. A concentrate achieving a score of 5 or less, in another aspect 4 or less, would be considered to have acceptable flavor stability.

The liquid beverage concentrates provided herein include 5 percent to 50 percent acidulant, 20 percent to 94.5 percent non-aqueous liquid, no more than 30 percent water, and 0.5 to 40 percent flavoring. For a concentrate containing water, the amounts of acidulant and water are included in a ratio of at least 0.25:1 (with "at least" meaning increasing quantities of acidulant relative to water), in another aspect at least 0.5:1, in another aspect at least 1:1, in another aspect at least 2:1, in another aspect at least about 3:1, in another aspect at least about 4:1, in another aspect at least about 5:1, and in yet another aspect at least about 6:1. In some approaches, the acidulant and flavoring are included at a ratio of at least about 0.1:1 (with "at least" meaning increasing quantities of acidulant relative to flavoring), in another aspect at least about 0.5:1, in another aspect at least about 1:1, in another aspect at least about 1.5:1, and in yet another aspect at least about 2:1. In some approaches, the concentrate includes more non-aqueous liquid than water. By virtue of balancing the amount of non-aqueous liquid, water, acidulant, and flavoring in the system, the liquid beverage concentrate contains less dissociated acid and has less flavor degradation as analyzed by a trained panel and/or analytical technique, such as HPLC, after three months storage at room temperature (in another aspect after six months storage at room temperature) in comparison to an otherwise identical concentrate including water instead of non-aqueous liquid.

In some aspects, for liquid beverage concentrates having between 0 to 30 percent water, in another aspect 15 to 30 percent water, the concentrate may further include 0 to 10 percent buffer. The amount of non-aqueous liquid in the concentrate is not particularly limited so long as the remaining ingredients can be dissolved or homogeneously suspended in the concentrate throughout the product's shelf life.

For purposes of calculating the water content of the concentrates described herein, the amount of water in the concentrate includes water included as a separate ingredient as well as any water provided in any ingredients used in the concentrate. By one approach, the concentrate may be formulated without intentional use of water. In at least some aspects, the presence of water in any form is minimized to the extent practical and, in other aspects, is substantially avoided (e.g., a water content of effectively about 0 percent by weight of the ingredient used in the concentrate). Therefore, in some aspects, dry, dried, powdered, or anhydrous forms of non-aqueous liquids, acidulants, flavorings, sweeteners, and other optional ingredients may be used to keep the amount of water in the concentrate to a minimum. For example, ingredients of the liquid concentrate may be subjected to drying to remove moisture prior to inclusion in the liquid beverage concentrate. In one aspect, the solids included in the concentrates may include substantially no water, including substantially no water of crystallization. In some aspects, it may also be advantageous to protect the concentrates against contact with water or water vapor to the extent practical during manufacture and storage.

In various approaches, the concentrate is formulated to be diluted by a factor of at least 25 times to provide a final beverage, which can be, for example, an 8 ounce beverage. By some approaches, the concentrate can be provided at a concentration of about 25 to about 500 times, in another aspect about 25 to about 225 times, in another aspect about 50 to about 200 times, in another aspect about 75 to about 160 times, and in yet another aspect about 90 to about 140 times that needed to provide a desired level of flavor intensity, acidity, and/or sweetness to a final beverage, which can be, for example, an 8 ounce beverage. The term "final beverage" as used herein means a beverage that has been prepared by diluting the concentrate to provide a beverage in a potable, consumable form. In some aspects, the concentrate is non-potable due to acidulant content and/or flavor intensity. By way of example to clarify the term "concentration," a concentration of 75 times (i.e., "75x") would be equivalent to 1 part concentrate to 74 parts water (or other potable liquid) to provide the final beverage. In other words, the flavor profile of the final beverage is taken into account when determining an appropriate level of dilution, and thus concentration, of the liquid beverage concentrate. The dilution factor of the concentrate can also be expressed as the amount necessary to provide a single serving of concentrate.

In one aspect, the concentration factor can be expressed as a level of dilution needed to provide a final beverage having a sweetness level equivalent to the degree of sweetness of a beverage containing about 5 to about 25 weight percent sucrose. One degree Brix corresponds to 1 gram of sucrose in 100 grams of aqueous solution. For example, the dilution factor of the beverage concentrate can be expressed as the dilution necessary to provide an equivalent of about 5 to about 25 degrees Brix, in another aspect about 8 to about 14 degrees Brix, and in another aspect about 8 to about 12 degrees Brix, in the resulting beverage. By this approach, one or more sweeteners can be included in the concentrated flavor composition in an amount effective to provide the beverage with a level of sweetness equivalent to the desired degrees Brix relative to sucrose.

In some aspects, the concentrated flavor composition may further include a sweetener. Useful sweeteners may include both nutritive and non-nutritive sweeteners, including both low intensity and high intensity sweeteners, such as, for example, honey, com syrup, high fructose corn syrup, erythritol, sucralose, aspartame, stevia, saccharine, monatin, luo han guo, neotame, sucrose, Rebaudioside A (often referred to as "Reb A"), fructose, cyclamates (such as sodium cyclamate), acesulfame potassium, and combinations thereof. The selection of sweetener and amount of sweetener added may depend, at least in part, on the desired viscosity of the concentrated flavor composition. For example, nutritive sweeteners like sucrose may be included in much higher amounts than high intensity sweeteners like neotame to provide the same level of sweetness and such higher total solids content contributed by the sweetener increases the viscosity of the composition. If desired, the sweetener can generally be added in an amount of about 0.2 to about 60 percent, with the lower end of the range generally more appropriate for high intensity sweeteners and the upper end of the range generally more appropriate for nutritive sweeteners. Other amounts of sweetener can also be included, if desired.

The flavored concentrates provided herein further include a substantial quantity of non-aqueous liquid ("NAL"). In one aspect, the concentrates include a total non-aqueous liquid content of 20 percent to 94.5 percent, in another aspect about 30 percent to about 90 percent, and in another aspect 35 percent to 80 percent, in another aspect about 55 percent to about 80 percent by weight of the concentrate. By "total non-aqueous liquid content" is meant the amount of any non-aqueous liquid from all sources, including for example any non-aqueous liquids from the flavoring and any additionally added non-aqueous liquids. The "total non-aqueous liquid content" specifically excludes any non-aqueous liquids contributed by the flavor key of the flavoring. Exemplary NALs include, but are not limited to, propylene glycol, glycerol, triacetin, ethanol, ethyl acetate, benzyl alcohol, vegetable oil, vitamin oil (e.g., Vitamin E, Vitamin A), isopropanol, 1,3-propanediol, and combinations thereof. In one aspect, selection of NAL for use in the beverage concentrates may depend, at least in part, on the ability of the NAL to solubilize other ingredients of the concentrate or to form an emulsion with another NAL, if desired.

For example, it has been found that sucralose, a high intensity sweetener, is more readily solubilized in 1,3-propanediol than in propylene glycol. Therefore, beverage concentrates containing sucralose may be advantageously prepared using a solvent comprising 1,3-propanediol to provide a beverage concentrate that is able to maintain sucralose in solution throughout its shelf life. In other instances, selection of NAL may also depend, at least in part, on the flavor provided by the NAL and the desired taste profile in the final beverage. In yet other instances, selection of NAL may also depend, at least in part, on the viscosity and/or the desired density of the resulting concentrate.

In many applications, it may be desirable to include acidulant in the concentrate so that a flavored beverage made therefrom has a tart flavor that enhances the overall flavor profile of the beverage. For example, it may be desirable to provide a lemon-flavored beverage that has a tart flavor similar to that of a lemonade drink made with fresh lemons. A variety of other flavors can also be enhanced by a tart flavor, such as other fruit flavors. In some approaches, the liquid concentrates provided herein include a substantial acidulant content In one aspect, the concentrate includes 5 to 50 percent acidulant, in another aspect about 5 to about 40 percent acidulant, in another aspect about 5 to about 30 percent acidulant, and in yet another aspect about 7 to about 25 percent acidulant by weight of the concentrate.

The acidulant included in the concentrate can include, for example, any food grade organic or inorganic acid, such as but not limited to citric acid, malic acid, succinic acid, acetic acid, hydrochloric acid, adipic acid, tartaric acid, fumaric acid, phosphoric acid, lactic acid, salts thereof, and combinations thereof. The selection of the acidulant may depend, at least in part, on the desired pH of the concentrate and/or taste imparted by the acidulant to the diluted final beverage. In another aspect, the amount of acidulant included in the concentrate may depend on the strength of the acid. For example, a larger quantity of lactic acid would be needed in the concentrate to reduce the pH in the final beverage than a stronger acid, such as phosphoric acid. By another approach, the concentration factor of the liquid beverage concentrate can be expressed as the level of dilution needed to obtain a final beverage having an acid range of 0.01 to 0.8 percent by weight of the beverage, in another aspect about 0.1 to about 0.3 percent by weight of the final beverage.

Because of the high concentration factor (i.e., at least about 25x) of the beverage concentrates provided herein, large amounts of acidulant (i.e., at least about 5 percent) are included in the concentrates to provide the desired tartness in the final beverage. It was surprisingly found that a large quantity of acidulant could be included in the beverage concentrates in the amount necessary to provide a tart flavor when diluted to provide a final beverage but without detrimentally affecting the stability of the flavor ingredient. The concentrates described herein with low water content and high acidulant content advantageously are characterized by reduced production of off-flavor notes and reduced degradation of added coloring and/or sweeteners, particularly high intensity sweeteners, during storage at room temperature as compared to otherwise identical beverage concentrates with higher water content.

The acidulant:flavoring ratio is at least about 0.1:1 and in another aspect at least about 1:1, where "at least" means increasing quantities of acidulant relative to flavoring. In some approaches, the amount of acidulant in the concentrate exceeds the amount of flavoring used therein, such as at least about 1.5:1, in another aspect at least about 2:1, and in another aspect at least about 3:1, where "at least" means increasing quantities of acidulant relative to flavoring. By some approaches, the acidulant and flavor key of the flavoring are included in the concentrates in a ratio of 1:2 to 10,000:1, in another aspect 1:1 to 4000:1, in another aspect about 1.5:1 to about 300:1, and in another aspect about 2:1 to about 25:1.

In some approaches, the acidulant and non-aqueous liquid can be provided in a ratio of about 1:19 to about 2.5:1, in another aspect about 1:16 to about 2:1, and in another aspect about 1:12 to about 1.5:1.

By virtue of balancing the amount of non-aqueous liquid, water, acidulant, and flavoring in the system, the liquid beverage concentrate contains less dissociated acid and has less flavor degradation after, for example, three months storage at room temperature (in another aspect after six months storage at room temperature) in comparison to an otherwise identical concentrate including water instead of non-aqueous liquid.

It has been found that acidulants typically have lower acid dissociation constants (*Kₐ*) in organic liquids (such as non-aqueous liquids) than in water. It is presently believed that this phenomenon has neither been disclosed nor intentionally exploited to advantageously reduce the effective acidity of liquid beverage concentrates containing large quantities of dissolved acidulants. The *Kₐ* value for a particular acidulant may be, for example, several orders of magnitude or more lower in a NAL than in water.

For example, a particular acidulant having a *Kₐ* value equal to about 10⁻³ (and a *pKₐ* value, defined as (-log₁₀*Kₐ*), equal to about 3) in water might have a *Kₐ* value equal to about 10⁻⁸ (and a *pKₐ* value equal to about 8) in a particular NAL, such as propylene glycol. Accordingly, the *Kₐ* value corresponding to the extent of acid dissociation occurring in the acidulant would be expected to be about five orders of magnitude lower (about 100,000 times lower) in the particular non-aqueous liquid than in water. Further, if the acidulant is dissolved in a mixture of water and a particular non-aqueous liquid, its resulting *Kₐ* value would generally be intermediate between its *Kₐ* values in pure water and pure non-aqueous liquid, and its exact *Kₐ* value would be related to the ratio of water to non-aqueous liquid in the mixture.

In general, the relationship between the acidulant *Kₐ* value and the composition of liquid in which the acidulant is dissolved is logarithmic in nature. Therefore, replacing even small proportions of water with one or more NAL can produce very substantial reductions in the acidulant *Kₐ* value and extent of acid dissociation in a liquid mixture. For example, replacing about half the water in the concentrate with a non-aqueous liquid may reduce the acidulant *Kₐ* value and extent of acid dissociation in a liquid mixture by many hundred-fold, many thousand-fold, many million-fold, or more depending on the composition of the non-aqueous liquid(s) and the proportion (or absence) of water in the liquid mixture.

NALs utilized in the compositions described herein may be either protic or aprotic. As used herein, protic NALs possess one or more hydroxyl group having an ionizable hydrogen atom, while aprotic NALs do not. Protic NALs that are particularly suited because of their generally bland flavor and compatibility with foods include, for example, glycerol, propylene glycol, and 1,3-propanediol. Aprotic NALs that may be utilized for generally the same reasons include, for example, triacetin and vegetable oils, such as coffee oil or medium-chain triglyceride oils. In general, food acids dissolved in aprotic NALs will dissociate to a lesser extent than the same acids dissolved in protic NALs, and acids dissolved in NAL mixtures will dissociate to intermediate extents in general proportion to the compositions and levels of NALs present NALs can be selected to advantageously control extent of acid dissociation and pH of the beverage concentrates created using acidic flavor sources and/or added acids.

Because NALs typically have higher solvent self-dissociation constants than water, acidulants dissolved in NALs have higher pH values than acidulants dissolved in water. For example, the 0-14 point scale commonly used to characterize the pH of aqueous solutions would generally need to be expanded to include a greater pH range, such as, for example, a scale of 0-16, 0-18, 0-20, or greater, depending on the composition of the particular NAL(s) utilized. Accordingly, the mid-points of such scales, which denote neutral pH, would generally have values greater than the value of pH 7, which is characteristic of water. However, the pH values of NALs containing dissolved food grade acidulants primarily will be determined by the acidulant *Kₐ* values and concentrations of acidulants in the liquids, rather than by the solvent self-dissociation constants of the NALs. Specialized pH electrodes, such as H_{2/}platinum electrodes, may be needed to obtain precise pH values of non-aqueous solutions, but commonly-used laboratory pH electrodes can be used to measure pH values of non-aqueous solutions to provide useful information and distinguish different compositions.

Even though an acidulant may completely dissolve in a NAL, it is believed that protons present in the acidulant's carboxyl groups may not dissociate or weakly dissociate (relative to their dissociation in water) -or may dissociate but remain in dose proximity to carboxyl anions-to beneficially lower the free proton concentration and thereby lower the potential to cause or promote chemical reactions in the concentrate. Further, the scarcity or absence of water in the flavored concentrates described herein reduces or prevents formation of highly reactive, strongly acidic hydronium ions that are present in acidified aqueous solutions. Therefore, the formation of hydronium ions is higher in concentrates containing higher amounts of water and lesser amounts of NAL. Lower *Kₐ* values and the resulting free proton concentration in the liquid beverage concentrates provided herein are believed to greatly slow or prevent unwanted chemical reactions, thereby improving flavor stability and product shelf-life despite the relatively high acidulant content.

In some aspects, the concentrates may further include buffer. For concentrates having lower water content, such as less than about 15 percent, buffer may be included for primarily flavor purposes. For concentrates having higher water content, such as 15 to 30 percent water, buffer may be included in an amount relative to the acidulant content For example, the acid;buffer ratio can be about 1:1 to about 25,000:1, in another aspect about 1.25:1 to about 4000:1, in another aspect about 1.7:1 to about 3000:1, and in another aspect about 2.3:1 to about 250:1. In this respect, a buffered concentrate may include more acidulant and can be diluted to provide a final beverage with enhanced tartness due to increased acidulant content as compared to a beverage provided from an otherwise identical concentrate at the same pH but which lacks buffers. Inclusion of buffers may also be advantageous to the flavor profile in the resulting final beverage.

Suitable buffers include, for example, a conjugated base of an acid (e.g., sodium citrate and potassium citrate), acetate, phosphate or any salt of an acid. In other instances, an undissociated salt of the acid can buffer the concentrate.

The concentrates described herein may be provided with a variety of different flavors, such as, for example, fruit flavors, tea flavors, coffee flavors, and combinations thereof. The flavor is provided by a flavoring including a flavor key. The term "flavor key," as used herein, is the component that imparts the predominant flavor to the flavoring and includes flavor agents such as essential oils, flavor essences, flavor compounds, flavor modifier, flavor enhancer, and the like. The flavor key does not include other components of the flavoring, including carriers and emulsifiers, which do not impart the predominant flavor to the flavoring.

Flavorings useful in the liquid concentrates described herein may include, for example, liquid flavorings (including, for example, alcohol-containing flavorings (e.g., flavorings containing ethanol, propylene glycol, 1,3-propanediol, glycerol, and combinations thereof), and flavor emulsions (e.g., nano- and micro-emulsions)) and powdered flavorings (including, for example, extruded, spray-dried, agglomerated, freeze-dried, and encapsulated flavorings). The flavorings may also be in the form of an extract, such as a fruit extract. The flavorings can be used alone or in various combinations to provide the concentrate with a desired flavor profile.

A variety of commercially-available flavorings can be used, such as those sold by Givaudan (Cincinnati, OH) and International Flavors & Fragrances Inc. (Dayton, NJ). The flavorings can be included at about 0.5 percent to about 40 percent, in another aspect about 1 percent to about 30 percent, and in another aspect about 5 to about 20 percent by weight of the concentrates. In some aspects, the precise amount of flavoring included in the composition may vary, at least in part, based on the concentration factor of the concentrate, the concentration of flavor key in the flavoring, and desired flavor profile of a final beverage prepared with the concentrate. Generally, extruded and spray-dried flavorings can be included in the concentrates in lesser amounts than alcohol-containing flavorings and flavor emulsions because the extruded and spray-dried flavorings often include a larger percentage of flavor key. Exemplary recipes for flavorings are provided in Table 1 below. Of course, flavorings with other formulations may also be used, if desired.

**Table 1: Exemplary Flavoring Formulations**

| | **Propylene Glycol Flavorings** | **Ethanol-Containing Flavorings** | **Flavor Emulsions** | **Extruded Flavorings** | **Spray-Dried Flavorings** |
|---|---|---|---|---|---|
| Flavor key | 1-20% | 1-20% | 1-10% | 1-40% | 1-40% |
| water | 0-10% | 0-10% | 70-80% | -- | -- |
| Ethanol | -- | 80-95% | -- | -- | -- |
| Propylene glycol | 80-95% | -- | -- | 0-4% | 0-4% |
| Emulsifier | -- | -- | 1-4% | 0.1-10% | -- |
| Carrier | -- | -- | -- | 1-95% | 1-95% |
| Emulsion stabilizer | -- | -- | 15-20% | -- | -- |
| preservative | 0-2% | 0-2% | 0-2% | 0-2% | 0-2% |

Many flavorings include one or more non-aqueous liquids, typically in the form of propylene glycol or ethanol. When such flavorings are included in the concentrates described herein, the non-aqueous liquid content of the flavorings is included in the calculation of the total NAL content of the concentrate. For example, if a flavoring has eighty percent propylene glycol and the flavoring is included in the concentrate at an amount of thirty percent, the flavoring contributes 24 percent propylene glycol to the total non-aqueous liquid content of the concentrate.

Extruded and spray-dried flavorings often include a large percentage of flavor key and carrier, such as corn syrup solids, maltodextrin, gum arabic, starch, and sugar solids. Extruded flavorings can also include small amounts of alcohol and emulsifier, if desired. Flavor emulsions can also include carriers, such as, for example, starch. In one aspect, the flavor emulsion does not include alcohol. In other aspects, the flavor emulsion may include low levels of alcohol (e.g., propylene glycol, 1,3-propanediol, and ethanol). A variety of emulsifiers can be used, such as but not limited to sucrose acetate isobutyrate and lecithin, and an emulsion stabilizer may be included, such as but not limited to gum acacia. Micro-emulsions often include a higher concentration of flavor key and generally can be included in lesser quantities than other flavor emulsions.

In another aspect, a variety of different flavor emulsions may be included in the concentrated composition. Suitable flavor emulsions include, for example, lemon, orange oil lemonade, lemon oil lemonade, pink lemonade, floral lemonade, orange, grapefruit, grapefruit citrus punch, and lime from Givaudan (Cincinnati, OH). Of course, other flavor emulsions or types of emulsions, including nano- or micro-emulsions, may be used, if desired.

In another aspect, a variety of different alcohol-containing flavorings may be included in the concentrated composition. The alcohols typically used in commercially available flavorings include compounds having one or more hydroxyl groups, including ethanol and propylene glycol, although others may be used, if desired. The flavoring may also include 1,3-propanediol, if desired. Suitable alcohol-containing flavorings include, for example, lemon, lime, cranberry, apple, watermelon, strawberry, pomegranate, berry, cherry, peach, passionfruit, mango, punch, white peach tea, sweet tea, and combinations thereof. For example, flavorings from commercial flavor houses include, for example, Lemon Lime, Cranberry Apple, Strawberry Watermelon, Pomegranate Berry, Peach Mango, White Peach Tea, and Tea Sweet from International Flavors & Fragrances Inc (New York, NY), as well as Peach Passionfruit and Tropical from Firmenich Inc. (Plainsboro, NJ). Other alcohol-containing flavorings may be used, if desired.

In yet another aspect, a variety of powdered flavorings may be included in the concentrate. The form of the powdered flavorings is not particularly limited and can include, for example, spray-dried, agglomerated, extruded, freeze-dried, and encapsulated flavorings. Suitable powdered flavorings include, for example, Natural & Artificial Tropical Punch from Givaudan (Cincinnati, OH), Natural & Artificial Orange from Symrise (Teterboro, NJ), and Natural Lemon from Firmenich Inc. (Plainsboro, NJ). Other powdered flavorings may also be used, if desired.

Optionally, colors can be included in the liquid beverage concentrates. The colors can include artificial colors, natural colors, or a combination thereof and can be included in the range of 0 to about 15 percent, in another aspect about 0.005 to 10 percent, in another aspect about 0.005 to 5 percent, and in yet another aspect in the range of about 0.005 to 1 percent, if desired. In formulations using natural colors, a higher percent by weight of the color may be needed to achieve desired color characteristics. It has been found that the stability of colors, particularly natural colors, can be enhanced in the low water formulations provided herein as compared to an otherwise Identical concentrate having a higher water content. The stability of the color can be quantified as measured on the Hunter Instruments L*a*b color scale. The L*a*b scale describes the color of a sample in terms of three color variables. The "L" scale represents the tint of a sample on a scale of 0 to 100, with a value of 100 representing white and a value of zero representing black. The "a" scale is a measure of the relative amount of green or red light reflected by the sample, with positive "a" values representing increasing intensity of red and negative "a" values representing increasing intensity of green. The "b" scale is a measure of the relative amount of blue or yellow light reflected by the sample, with positive values representing increasing intensity of yellow and negative values indicating increasing intensity of blue. The various types of colors generally degrade at different rates, but the stability of a particular color can be analyzed, for example, over a period of time at room temperature in the concentrates described herein in comparison to an otherwise identical concentrate where the NAL content has been replaced with water.

If desired, the concentrated flavor compositions can further include salts, preservatives, viscosifiers, surfactants, stimulants, antioxidants, caffeine, electrolytes (including salts), nutrients (e.g., vitamins and minerals), stabilizers, gums, and the like. Preservatives, such as EDTA, sodium benzoate, potassium sorbate, sodium hexametaphosphate, nisin, natamycin, polylysine, and the like can be included, if desired, but are generally not necessary for shelf stability due to the low water content Salts can be added to the concentrate to provide electrolytes, which is particularly desirable for sports-type or health drinks. Exemplary salts include, for example, sodium citrate, mono sodium phosphate, potassium chloride, magnesium chloride, sodium chloride, calcium chloride, the like, and combinations thereof. For example, sodium lactate, or other salts, may be used to provide a nutritive source of minerals or for pH buffering. By one approach, the additional ingredients can be included in any combination and in any amount so long as the desired acidulant, flavoring, and/or non-aqueous liquid percentage by weight of the concentrate and flavor of the concentrate are maintained. The amount of the additional ingredients included may also depend on the ability to solubilize or disperse the ingredients in the NAL. Further, certain ingredients, such as salts, may be more stable in terms of delaying or preventing precipitation when the concentrate is substantially free of water.

The concentrate can be formulated to have Newtonian or non-Newtonian flow characteristics. Concentrates that do not include gums or thickeners will have Newtonian flow characteristics, meaning that the viscosity is independent of the shear rate. Inclusion of, for example, xanthan or certain other gums or thickeners can create pseudo-plastic and shear thinning characteristics of the concentrate. A drop in viscosity as the shear rate increases indicates that shear thinning is occurring.

In one aspect, the viscosity of a concentrate having Newtonian flow characteristics can be in the range of about 1 to about 500 cP, in another aspect about 1 to about 200cP, in another aspect about 1 to about 75 cP, in another aspect about 1 to about 25 cP, and in another aspect about 1 to about 5 cP as measured with a Brookfield DV-II+ PRO viscometer with Enhanced UL (Ultra Low) Adapter with spindle code 00 at 20° C.

In one aspect, the viscosity of a concentrate having non-Newtonian flow characteristics can be in the range of about 20 to about 5,000 cP, in another aspect about 20 to about 1500 cP, in another aspect about 20 to about 500 cP, and in another aspect about 20 to about 100 cP as measured with a Brookfield DV-II+ PRO viscometer with spindle 06 measured after 2 minutes at 12 rpm at 20° C.

Because of the low water content and high NAL content in the concentrates described herein, the concentrates have a low water activity. By some approaches, the water activity is less than 0.6, in another aspect less than about 0.5, in another aspect less than about 0.4, in another aspect less than about 0.3, and in another aspect less than about 0.2. The water activity can be measured with any suitable device, such as, for example, an AquaLab Water Activity Meter from Decagon Devices, Inc. (Pullman, Washington). An AquaLab Water Activity Meter with Volatile Blocker should be used when the NAL is propylene glycol and/or ethanol.

Other water-activity reducing liquids can also be included in the concentrates, if desired, so long as the liquid provides the desired taste profile in the final beverage. Polyols, even if not liquid, such as, for example, erythritol, mannitol, sorbitol, maltitol, xylitol, and lactitol), and combinations thereof, as well as carbohydrates, such as sucrose, can be included to lower water activity.

### Preparation of Concentrates Having Low Water Content

Liquid beverage concentrates having low water content and high acidulant content can be provided in a variety of forms and can be prepared by a variety of processes. Concentrates in the form of emulsions, solutions (i.e., in which the ingredients are dissolved in the non-aqueous liquid), and suspensions can be prepared by the methods described below. The concentrates described herein can include both water-soluble and water-insoluble ingredients, as well as ingredients that are soluble and insoluble in the selected NAL. Other methods of preparing the liquid concentrates having low water content as described herein can also be used, if desired. The following methods are intended to be exemplary but not limiting in scope.

In one aspect, a flavored liquid beverage concentrate is provided in the form of a solution. In this respect, a method is provided for preparing a liquid beverage concentrate having a low water content and high acidulant content in the form of a solution, the method comprising mixing 5 to 50 percent acidulant; 0.5 to 40 percent flavoring; non-aqueous liquid in an amount effective to provide a total non-aqueous liquid content of 20 percent to 94.5 percent by weight of the concentrate; and no more than 30 percent water to provide the liquid beverage concentrate. Generally, the mixing is effective to dissolve the acidulant and flavoring in the non-aqueous liquid and/or water. If necessary, the liquid beverage concentrate can be treated to improve dissolution of any solids. Suitable methods for improving dissolution include, for example, sonication and heating of the liquid beverage concentrate before or after addition of the acidulant and optional other ingredients to the non-aqueous liquid. The non-aqueous liquid selected for use herein should be capable of completely dissolving any liquid or solid ingredients at the levels needed to formulate the concentrate.

In another aspect, a method is provided for preparing a flavored liquid beverage concentrate having a low water content and high acidulant content in the form of a solution, the method comprising heating non-aqueous liquid in an amount effective to provide a total non-aqueous liquid content of 20 percent to 94.5 percent by weight of the concentrate to a temperature below the boiling point of the non-aqueous liquid; mixing 5 to 50 percent acidulant in the non-aqueous liquid to dissolve the acidulant in the non-aqueous liquid; cooling the non-aqueous liquid with dissolved acidulant; and adding 0.5 to 40 percent flavoring to the cooled non-aqueous liquid to provide the flavored liquid beverage concentrate. In this method, the non-aqueous liquid is heated to a temperature between room temperature and the non-aqueous liquid's boiling point before or during addition of the acidulant and optional other solids in order to increase the rate of dissolution of the acidulant and optional other solids. It is generally desirable to cool the heated mixture prior to addition of the flavoring to minimize or prevent undesirable chemical reactions and flavor changes. Again, the non-aqueous liquid selected for use herein should be capable of completely dissolving any liquid or solid components of the liquid beverage concentrate at the levels needed to formulate the concentrate. Other optional temperature sensitive ingredients can also be added after cooling the NAL.

By one approach, a flavored liquid beverage concentrate can be prepared in the form of an emulsion. The method comprises mixing 5 to 50 percent acidulant; a first non-aqueous liquid in an amount effective to provide a total non-aqueous liquid content of 20 percent to 94.5 percent by weight of the concentrate; about 0.01 percent to about 5 percent surfactant; and 0.5 to 40 percent flavoring, wherein the first non-aqueous liquid is effective to dissolve the acidulant to form the flavored liquid beverage concentrate. In some aspects, the flavoring includes a second non-aqueous liquid that is immiscible with the first non-aqueous liquid. In another aspect, a second non-aqueous liquid may be included in an amount effective to provide a total non-aqueous liquid content of 20 percent to 94.5 percent by weight of the concentrate. For example, an emulsion can be prepared where the first non-aqueous liquid is an oil (such as, for example, vegetable oil, vitamins in oil form (e.g., Vitamin E, Vitamin A, etc.) and the second non-aqueous liquid is propylene glycol or 1,3-propanediol. Various mixing techniques can be used, including for example using a rotor-stator mixer.

By another approach, a flavored liquid beverage concentrate can be prepared as a suspension or dispersion of insoluble solids component in non-aqueous liquid, where the insoluble solids component is insoluble in NAL. The method comprises providing an insoluble solids component comprising 5 to 50 percent acidulant by weight of the concentrate, the solids component having a mean particle size of less than about 50 microns; adding 0.5 to 40 percent flavoring to non-aqueous liquid in an amount effective to provide a total non-aqueous liquid content of 20 percent to 94.5 percent by weight of the concentrate; and mixing the insoluble solids component with the non-aqueous liquid to provide the flavored liquid beverage concentrate. If the insoluble solids component does not have a mean particle size of less than about 50 microns, the method may further comprise treating the insoluble solids component to reduce the mean particle size to less than about 50 microns. Further, the particle size of the insoluble solids component can be reduced before or after introduction into the non-aqueous liquid. The insoluble solids component may further comprise additional ingredients of the flavored beverage concentrate, including, for example, sweetener. In some approaches, when the flavoring is an insoluble solid, the flavoring also is provided having a mean particle size of less than about 50 microns. If desired, the flavoring can be combined with the acidulant and treated with the particle size reduction step. The particle size of any solids that are soluble in the NAL is not particularly limited.

The particle size of the insoluble solids component can be reduced by grinding, milling, or any other suitable size reduction method, including, for example, solidifying previously dissolved solids to a desired particle size. The precise conditions used during grinding or milling are not believed to be critical and suitable conditions could readily be determined by one of ordinary skill in the art to provide desired appearance and viscosity, as well as to control the sedimentation rate of solids suspended in the non-aqueous liquid during storage.

The particle size reduction method of the insoluble solids component can be carried out before and/or after introduction into the non-aqueous liquid. In some aspects, the mean particle size of the insoluble solids component is less than about 50 microns, in another aspect less than about 25 microns, in another aspect than about 10 microns, in another aspect less than about 1 micron, and in another aspect less than about 0.1 micron. Suspensions comprising insoluble solids with a median particle size greater than about 0.1 microns can be referred to as a "sol," while suspensions comprising insoluble solids with a median particle size less than about 0.1 micron can be referred to as a "colloidal sol." Colloidal sols are generally more stable against precipitation over time. In general, the smaller the particle size, the longer the particles will stay suspended without precipitating. While not wishing to be limited by theory, it is presently believed that reduction of the mean particle size is effective to prolong suspension of the solids component in the non-aqueous liquid sufficient to delay or prevent the precipitation of solid particles during manufacture and storage.

If desired, one or more chemical dispersing agent can be added to the concentrate to delay or prevent precipitation of solids in the non-aqueous liquid. Non-surface active polymer or a surface active substance added to a suspension to improve the separation of particles and to prevent settling, clumping, or flocculation of particles. For example, edible hydrocolloids, surfactants, or emulsifier, such as, for example, polyglycerol polyricinoleate, and polysorbate 60, can be included.

By another approach, a flavored liquid beverage concentrate that is substantially free of water can be prepared by a method comprising: providing a solids component comprising 5 to about 30 percent acidulant in non-aqueous liquid in an amount effective to provide a total non-aqueous liquid content of 20 percent to 94.5 percent by weight of the concentrate, the solids component being provided in an amount that exceeds its solubility in the non-aqueous liquid at a temperature below the melting point of the solids component; melting the solids component to dissolve the melted solids component in the non-aqueous liquid; cooling the non-aqueous liquid containing the dissolved solids under conditions effective to slow or prevent solidification of the melted solids (e.g., for at least about 24 hours, in another aspect at least about one week, and in another aspect at least about one month); and adding 0.5 to 40 percent flavoring to the cooled non-aqueous liquid containing the dissolved solids to provide the flavored liquid beverage concentrate.

By another approach, a flavored liquid beverage concentrate can be prepared by a method comprising providing a solids component comprising 5 to about 30 percent acidulant in non-aqueous liquid in an amount effective to provide a total non-aqueous liquid content of 20 percent to 94.5 percent by weight of the concentrate, the solids component being provided in an amount that exceeds its solubility in the non-aqueous liquid at a temperature below the melting point of the solids component; melting the solids component to dissolve the melted solids component in the non-aqueous liquid; cooling the non-aqueous liquid containing the dissolved solids under conditions effective to form suspended solid particles in the non-aqueous liquid; and adding 0.5 to 40 percent flavoring to the cooled non-aqueous liquid containing the suspended solid particles to provide the flavored liquid beverage concentrate.

In both of the above-described approaches involving the melting of the solids component, the solids component is included in super saturated amounts in the non-aqueous liquid (i.e., the solids component is included at a concentrate that exceeds its solubility therein at any temperature below their solid melting point). When the solids component includes at least two different ingredients, the solids component is melted at a temperature high enough to melt the ingredient having the highest melting point The solids component in the non-aqueous liquid is then melted by heating to completely dissolve the solids in the non-aqueous liquid to provide a super-saturated melt The solids are considered to be completely dissolved upon visual inspection.

Flavor components, acidulants, and optional other ingredients present in melts or suspensions may exist simultaneously in one or more of a dissolved, dispersed, or suspended state in the beverage concentrate. A crystallization inhibiting substance may be added before, during, or after any dissolving, heating, or grinding steps. Such inhibiting substance may be utilized to prevent solid crystallization or limit the size of crystals formed in manufacture or during storage. Suitable crystallization inhibiting substances include, but are not limited to, polyvinylpyrrolidone and hydroxypropylmethylcellulose. The crystallization inhibiting substance may be included at a level of about 0 to about 1 percent by weight of the concentrate, in another aspect at a level of about 0.1 to about 1 percent by weight of the concentrate.

### Selectton of Acidulant Based on Flavoring

By one approach, selection of the acidulant used in various embodiments of the beverage concentrates described herein can provide substantially improved flavor and decreased aftertaste, particularly when the concentrate is dosed to provide a final beverage with greater than typical amounts of concentrate. Selection of the acidulant in conjunction with the flavoring and, more particularly, selection of the acidulant based on the acidulant naturally found in the fruit from which the flavor key is derived from, or formulated or synthesized to mimic, can provide significant taste benefits. For example, malic acid is the predominant, naturally-occurring acid in watermelon. It was found that inclusion of malic acid in a watermelon-flavored beverage concentrate provided significantly improved taste compared to a similar beverage concentrate containing citric acid instead of malic acid, particularly when the concentrate is dosed to provide a final beverage with more than a single serving of concentrate. Other fruits where malic acid is the predominant, naturally-occurring acid include, for example, blackberry (~50%), cherry, apple, peach, nectarine, lychee, quince, and pear. For example, when a concentrate formulated to be dosed at a ratio of concentrate to water of 1:100 (i.e., a single serving of concentrate) is instead dosed at a ratio of at least 3:100 (i.e., at least three single servings of concentrate), the resulting beverage has greater flavor intensity but with smoother tartness profile with less harsh acidic aftertaste and/or artificial flavor perception even though the beverage includes three times the amount of acid and flavoring intended to be included in the beverage. Advantageously, selection of the acidulant in conjunction with the flavoring allows a consumer to increase the amount of concentrate-and thereby the amount of flavoring-in the final beverage to desired levels without increasing negative taste attributes which can occur if the acidulant is not selected in conjunction with the flavoring as described herein.

Similarly, fruits where citric acid is the predominant, naturally-occurring acid include, for example, citrus fruits (e.g., lemon or lime), strawberry, orange, and pineapple. It was found that when the acid used in concentrates having these flavor profiles includes at least 50 percent citric acid (i.e., at least a majority of the acid was citric acid) provided significantly improved taste compared to a similar beverage made with a lesser quantity of citric acid.

By one approach, for flavorings where the fruit from which the flavor key was derived or was formulated to mimic has malic acid as the predominant, naturally-occurring acid, flavor of the resulting beverage can be advantageously improved when malic acid comprises at least about 50 percent of the acid in the concentrate, in another aspect about 75 to about 95 percent of the acid in the concentrate, and in yet another aspect about 85 to about 95 percent of the acid in the concentrate.

By another approach, for flavorings where the fruit from which the flavor key was derived or was formulated to mimic has citric acid as the predominant, naturally-occurring acid, flavor of the resulting final beverage can be advantageously improved when citric acid comprises at least about 50 percent of the acid in the concentrate, in another aspect about 75 to about 95 percent of the acid in the concentrate, and in yet another aspect about 85 to about 95 percent of the acid in the Concentrate.

### Incorporation into Food and beverages

The concentrates described herein can also be added to potable liquids to form flavored beverages. In some aspects, the concentrate may be non-potable (such as due to the high acid content and intensity of flavor). For example, the beverage concentrate can be used to provide flavor to water, cola, carbonated water, tea, coffee, seltzer, club soda, the like, and can also be used to enhance the flavor of juice. In one aspect, the beverage concentrate can be used to provide flavor to alcoholic beverages, including but not limited to flavored champagne, sparkling wine, wine spritzer, cocktail, martini, or the like. By some approaches, the concentrate can be added to the potable liquid without stirring.

The concentrates described herein can be combined with a variety of food products to add flavor to the food products. For example, the concentrates described herein can be used to provide flavor to a variety of solid, semi-solid, and liquid food products, including but not limited to oatmeal, cereal, yogurt, strained yogurt, cottage cheese, cream cheese, frosting, salad dressing, sauce, and desserts such as ice cream, sherbet, sorbet, and Italian ice. Appropriate ratios of the beverage concentrate to food product or beverage can readily be determined by one of ordinary skill in the art.

### Packaging

Some conventional beverages and beverage concentrates, such as juices, are hot filled (for example, at 93°C) during packaging and then sealed to prevent microbial growth. The beverage concentrates provided herein, given a combination of the non-aqueous liquid content, acidulant content, and low water activity, do not require thermal treatments or mechanical treatments, such as pressure or ultrasound, to reduce microbial activity either before or after packaging. By one approach, the liquid concentrates are advantageously suitable for cold filling while maintaining shelf stability for at least about three months, in another aspect at least about six months, in another aspect at least about eight months, in another aspect at least about ten months, and in another aspect at least about twelve months at room temperature. It is noted, however, that the compositions are not precluded from receiving such treatments either. The packaging for the concentrates also generally does not require additional chemical or irradiation treatment. The product, processing equipment, package and manufacturing environment should be subject to good manufacturing practices but need not be subject to aseptic packaging practices. As such, the concentrates described herein can allow for reduced manufacturing costs.

The concentrated beverage liquids described herein can be used with a variety of different types of containers. One exemplary container is described in WO 2011/031985, which is referenced herein. Other types of containers can also be used, if desired.

In one aspect, the liquid beverage concentrates may be packaged in containers in an amount of about 14.2 to about 170.1g (about 0.5 to about 6 oz) of concentrate, in another aspect of about 28.4 to about 113.4g (about 1 to about 4 oz), and in another aspect about 28.4 to about 57.6g (about 1 to about 2 oz), with said quantity being sufficient to make at least about 10 of 226.8g (eight oz) servings of flavored beverage.

Advantages and embodiments of the concentrate compositions described herein are further illustrated by the following examples; however, the particular conditions, processing schemes, materials, and amounts thereof recited in these examples, as well as other conditions and details, should not be construed to unduly limit the compositions and methods described herein. All percentages in this application are by weight unless otherwise indicated.

### Examples

### Example 1. Stability of Lemon Flavoring in Liquid Concentrates Having Varying Water Concentrations

Concentrated flavor compositions were prepared having about 22.4 percent acid, 11.48 percent lemon flavoring, and water content ranging from 5 percent to 35 percent according to the formulations provided in Table 2 below. A high water comparative sample was prepared containing about 63 percent water. The experimental samples included propylene glycol to make up for the reduced water content. The pH of each sample was also measured. The concentrates were placed in 48 mL bottles comprised of multiple layers of mainly HDPE with an oxygen barrier layer.

**Table 2. Formulations of Concentrated Flavor Compositions Having Low Water Content**

| | 5% Water | 10% Water | 15% Water | 25% Water | 35% Water | 64% Water |
|---|---|---|---|---|---|---|
| Water | 5.0 | 10.0 | 15.0 | 25.0 | 35.0 | 64.0175 |
| Propylene glycol | 59.0675 | 54.0675 | 49.0675 | 39.0675 | 29.0675 | 0 |
| Citric acid (dry) | 22.4 | 22.4 | 22.4 | 22.4 | 22.4 | 22.4 |
| Potassium citrate | 0.6 | 0.6 | 0.6 | 0.6 | 0.6 | 0.6 |
| Lemon Sicilian Generessence Flavoring | 11.48 | 11.48 | 11.48 | 11.48 | 11.48 | 11.48 |
| Suralose (dry) | 1.4204 | 1.4204 | 1.4204 | 1.4204 | 1.4204 | 1.4204 |
| EDTA | 0.0321 | 0.0321 | 0.0321 | 0.0321 | 0.0321 | 0.0321 |
| Potassium Sorbate | 0 | 0 | 0 | 0 | 0 | 0.05 |
| Total | 100.0 | 100.0 | 100.0 | 100.0 | 100.0 | 100.0 |
| Density | 1.09 g/ml | 1.09 g/ml | 1.09 g/ml | 1.09 g/ml | 1.09 g/ml | 1.09 g/ml |

The samples were separated into three groups for storage for up to four weeks. One group was stored at -28.9°C (-20° F) as control samples. The control samples are assumed to have no flavor degradation during storage and are considered "time 0." A second group was stored at 21.1°C (70° F (room temperature)) and the third group at 32.2°C (90° F).

Each sample was used to provide a beverage by diluting 1 part concentrate in 120 parts water, tasted by a panel of food scientists, and rated versus the control on the scale below:

| | |
|---|---|
| 1 | Identical to control |
| 2-4.9 | Slightly/moderately different than control |
| 5.0-10 | Unacceptably different than control |

The results from the test are presented in Table 3 below. The samples with the lowest water content were most similar to the control. Replacement of water with various amounts of propylene glycol was effective to maintain flavor in the samples for longer periods of time, even at temperatures above ambient. The data presented is only for four weeks of storage. Longer storage is expected to result in much greater levels of flavor degradation for the higher water samples.

**Table 3. Degree of Difference Sensory Evaluation**

| | Week 1 | Week 2 | Week 4 | | pH |
|---|---|---|---|---|---|
| Product | Stored at 32.2°C(90°F) and 50% Relative Humidity | Stored at 32.2°C(90°F) and 50% Relative Humidity | Stored at 21.1°C(70°F) and 50% Relative Humidity | Stored at 32.2°C(90°F) and 85% Relative Humidity | |
| 64% water | 5.2 | 6.4 | 5.2 | 5.9 | 1.76 |
| 35% water | 3.7 | 4.1 | 3.6 | 5.2 | 1.94 |
| 25% water | 2.5 | 3.7 | 3.0 | 4.3 | 2.12 |
| 15% water | 1.8 | 2.3 | 2.6 | 3.3 | 2.26 |
| 10% water | 1.5 | 1.7 | 1.9 | 2.8 | 2.33 |
| 5% water | 1.3 | 1.5 | 1.8 | 2.3 | 2.43 |

### Example 2. Stability of Lemon Flavoring in Liquid Concentrates Having Varying Water Concentrations

A similar experiment was carried out using an ethanol-containing lemon flavor and substituting ethanol for water in the low water samples. The samples were prepared according to the formulations provided in Table 4 below. The samples were placed in 48 mL bottles comprised of multiple layers of mainly HDPE with an oxygen barrier layer.

**Table 4. Formulations of Samples Having Low Water Content**

| | High Water Comparative Sample | 5% Water | 10% Water | 15% Water | 25% Water | 35% Water |
|---|---|---|---|---|---|---|
| Water | 64.0175 | 5.0 | 10.0 | 15.0 | 25.0 | 35.0 |
| Ethanol | 0 | 58.3679 | 53.3679 | 48.3679 | 38.3679 | 28.3679 |
| Critic acid (dry) | 22.4 | 22.4 | 22.4 | 22.4 | 22.4 | 22.4 |
| Potassium citrate | 0.6 | 0.6 | 0.6 | 0.6 | 0.6 | 0.6 |
| Lemon Sicilian Generessence Flavoring | 11.48 | 11.48 | 11.48 | 11.48 | 11.48 | 11.48 |
| Sucralose (dry) | 1.4204 | 1.4204 | 1.4204 | 1.4204 | 1.4204 | 1.4204 |
| EDTA | 0.321 | 0.321 | 0.321 | 0.321 | 0.321 | 0.321 |
| Potassium sorbate | 0.05 | 0 | 0 | 0 | 0 | 0 |
| Total | 100.0 | 100.0 | 100.0 | 100.0 | 100.0 | 100.0 |
| Density | 1.09 g/ml | 1.09 g/ml | 1.09 g/ml | 1.09 g/ml | 1.09 g/ml | 1.09 g/ml |

As in Example 1, the samples were separated into three groups for storage at -28.8°C(-20° F (as the control)), 21.1°C(70° F), and 32.2°C(90° F) for storage for up to four weeks. Each sample was used to prepare a beverage by diluting 1 part sample in 120 parts water. The samples were tasted and rated versus the control based on the scale used in Example 1. The results are presented in Table 5 below.

**Table 5. Degree of Difference Sensory Evaluation**

| | Week 1 | Week 4 | | pH |
|---|---|---|---|---|
| Product | Stored at 32.2°C(90°F) and 50% Relative Humidity | Stored at 21.1°C(70°F) and 50% Relative Humidity | Stored at 32.2°C(90°PF) and 85% Relative Humidity | |
| 64% water | 5.4 | 6.5 | 7.5 | 1.71 |
| 35% water | 3.1 | 2.5 | 5.5 | 2.20 |
| 25% water | 3.1 | 2.5 | 3.5 | 2.41 |
| 15% water | 2.1 | 1.8 | 3.0 | 2.59 |
| 10% water | 2.1 | 1.8 | 2.0 | 2.64 |
| 5% water | 2.1 | 1.5 | 2.0 | 2.56 |

Replacement of water with various amounts of ethanol was effective to maintain flavor in the samples for longer periods of time. Also, storage of the samples at 21.1°C(70° F) instead of 32.2°C(90° F) contributed to maintaining the flavor profile of the samples for longer periods of time.

The sensory data for the lemon-flavored samples where water content was reduced and partially replaced with either propylene glycol (Example 1) or ethanol (Example 2) demonstrates that the degradation of the lemon flavor and creation of off-notes during storage was greatly reduced and/or delayed. The trend shows that replacement of higher amounts of water with non-aqueous liquids resulted in less degradation of the lemon flavor during storage. While not wishing to be limited by theory, it is presently believed that this is partially due to the increased pH being observed for the samples containing less water. It is also thought that, even though water and ethanol or propylene glycol are fully miscible, the lemon flavor may have a stronger affinity for the ethanol and propylene glycol which may, at least to some degree, protect the flavor from the acid in the samples.

### Example 3. Stability of Neotame in Concentrates Having Varying Water Concentrations

Certain high intensity dipeptide sweeteners, such as aspartame and neotame, have a tendency to degrade at other than a particular pH. For example, aspartame and neotame are most stable between pH 4-4.5 and have increased rate of degradation at lower or higher pH. The experiments of this example were conducted to determine if non-aqueous and/or low water systems could extend the shelf-life of neotame.

Liquid beverage concentrates were prepared according to Table 6 below.

**Table 6. Formulations With Varying Water Content**

| | 0% Water Sample | 5% Water Sample | 15% Water Sample | 39% Water Sample | 63% Water Sample |
|---|---|---|---|---|---|
| | (%) | (%) | (%) | (%) | (%) |
| Water | 0 | 5.0 | 15.0 | 38.885 | 63.02 |
| Citric acid (dry) | 20.6 | 20.6 | 20.6 | 20.6 | 20.6 |
| Potassium sorbate | 0 | 0 | 0 | 0 | 0.05 |
| Potassium citrate | 0 | 1.5 | 1.5 | 1.5 | 1.5 |
| Propylene glycol | 79.27 | 72.77 | 62.77 | 38.885 | 14.7 |
| Neotame | 0.13 | 0.13 | 0.13 | 0.13 | 0.13 |

Each sample was divided into two groups and stored at -28.8°C (-20° F) (control) and 32.2°C (90° F). The samples were tasted after two weeks. The samples stored at 28.8°C(-20° F) were controls for the samples stored at 32.2°C(90° F). Panelists were asked to rate how similar in sweetness the samples stored at 32.2°C(90° F) were to the -28.8°C(-20° F) samples. The panelists used a 10 point scale as described in Example 1 to evaluate the samples. The data is presented in Table 7 below. After 2 weeks of storage, it can clearly be seen that the samples at 32.2°C(90° F) having the lowest amounts of water are closer in sweetness to the control samples stored at -28.8°C(-20° F).

**Table 7. Degree of Difference Sensory Evaluation**

| | | | | | |
|---|---|---|---|---|---|
| Water percentage: | 0% | 5% | 15% | 38% | 63% |
| Similarity Sensory Scores at 2 Weeks Comparing 32.2 °C to -28.8 °C (90°F to -20°F) Samples | 3.57 | 3.57 | 4.33 | 5.29 | 6.00 |

The samples with 5 percent water and 63 percent water, stored at both -28.8°C (-20° F) and 32.2°C (90° F), were sent to Northland Laboratories (Northbook, I11.) after three weeks of storage to be analyzed for neotame content by HPLC. The results presented in Table 8 below show that degradation of neotame was significantly reduced in the 5 percent water sample versus the 63 percent water sample.

**Table 8. Analysis of Neotame after Three Weeks at -28.8°C (-20°F) and 32.2°C (90° F).**

| Water Percentage | % Neotame at -28.8°C (-20°F) | % Neotame at 32.2°C (90° F) | % Remaining Compared to -28.8°C (-20°F) |
|---|---|---|---|
| 5% | 0.13% | 0.077% | 60% |
| 63% | 0.13% | 0.058% | 45% |

### Example 4. Stability of Food Colors in Low Water Formulations

Some food colors, particularly colors exempt from certification, often called "natural colors," are sensitive to low pH environments. To study the effect of low water systems on color stability, concentrated flavor compositions were made with 5 percent water and 63 percent water. Both samples included citric acid added at 30 percent with no buffer. Red beet juice concentrate was used as a natural color and was added to both samples at 3.6 percent by weight of the composition. Samples were stored at both -28.8°C(-20° F) and 32.2°C (90° F). The -28.8°C(-20° F) sample was used as the control based on the assumption that red beet juice concentrate would not degrade at -28.8°(-20° F). After storage for 10 days, the samples were diluted into water at a ratio of 1:120 to provide a beverage with 0.03 percent red beet juice concentrate. The color of the samples was analyzed with a Hunter Colorimeter and the results are presented in Table 9 below. The color of both samples stored at 32.2°C(90° F) had degraded, but the color was significantly more degraded in the 63 percent water sample.

**Table 9. Hunter Color Values for Red Beet Juice stored for 10 days at -20°F and 90°F**

| Sample | L | a | b | Delta-E CMC |
|---|---|---|---|---|
| 63%water at 32.2°C(-20°F) | 94.6 | 9.16 | -3.20 | 8.36 |
| 63% water at 32.2°C(90°F) | 99.2 | 0.84 | 0.82 | |
| 5% water at 32.2°C(-20°F) | 94.9 | 8.65 | -2.84 | 5.02 |
| 5% water at 32.2°C(90°F) | 97.3 | 6.05 | 1.16 | |

As can be seen in the table above, the "a" value dropped much more for the 63 percent water sample at 32.2°C(90° F) compared to the 5 percent water sample at 32.2°C(90° F). The lower "a" value indicates that the red color of red beet juice concentrate has faded significantly. The table also indicates that the overall color intensity ("L" value) is less for the 63 percent water sample at 32.2°C(90° F) compared to the 5 percent water sample at 32.2°C(90° F). Finally, delta-E CMC (dE CMC) is a single number measurement that defines an elliptical color difference space around the product standard dE CMC contrasts the rectangular color difference space created from the auto-toleranced L*,a*,b* ranges which give the same weight to hue, value and chroma. The table above shows that the overall changes are more significant for the 63 percent water samples compared to the 5 percent water samples.

### Example 5. Stability of Lemon Flavoring in Non-Aqueous Concentrates

An acidified, non-aqueous concentrate was prepared by adding solid acidulant (malic acid; 23%/wit.), solid sweetener (neotame; 0,5%/wit.), and liquid lemon flavor (citral; 7.5%/wt.) to non-aqueous liquid (propylene glycol; 69%/wit.) while mixing on a stir plate at room temperature until both the solids and liquid completely dissolved in the non-aqueous liquid.

A comparative high water concentrate was prepared by dissolving solid malic acid (23%/wit), solid neotame (0.5%/wt.), and citral (7.5%/wt.) in water (69%/wit.) while mixing on a stir plate at room temperature until both the solids and liquid completely dissolved in the water.

Both samples were stored for four days at 37°C in capped glass vials under an air headspace. The samples were removed from storage and separately added to cool tap water at a level of one part beverage concentrate to 100 parts by weight water to prepare beverages. Both the beverage concentrates and prepared beverages were tasted and assessed for aroma quality.

The freshness and impact of lemon aroma and flavor had greatly deteriorated in the comparative samples while no such loss of quality or impact was perceived in the non-aqueous concentrate and beverage made therefrom. Further, the beverage prepared from the non-aqueous concentrate had noticeably sweeter flavor and was more yellow in color, indicating that both citral and neotame were degraded to some extent during storage by the acidified water in the comparative concentrate and that neither was noticeably degraded during storage in the acidified propylene glycol of the non-aqueous concentrate.

Subsequent evaluations after even longer storage times accentuated quality and stability differences between the non-aqueous and comparative products. Even after one month of storage, no quality issues were observed in the non-aqueous product, which retained a strong lemon flavor and aroma, yellow color, and sweetness. By comparison, the comparative product continued to deteriorate over time.

### Example 6. Preparation of Non-Aqueous Concentrate in the Form of a Suspension

An acidified, non-aqueous fluid composition was prepared by first adding two solid acidulants (malic and citric acids; 15 percent by weight each) and solid sweetener (sucralose; 2.5%/wit.) to non-aqueous liquid (soybean oil; 67.5%/wit.) and stirred using an immersion mixer at room temperature to uniformly suspend all three of the insoluble solids in the soybean oil to provide a solid-in-liquid suspension. The suspension was then subjected to milling using a Buhler-K8 colloid type mill containing 1.5 mm glass beads (350 g per minute flow rate; 1.38 kPA (0.2 psi) backpressure; and 1400 rpm speed) to provide a viscous, opaque sol comprised of extremely small solid particles suspended in the soybean oil.

A liquid lemon flavor (citral; 7.5%/wit.) was uniformly stirred into the milled sol (92.5%/wit.) to provide an acidified, non-aqueous liquid flavoring composition. This composition was then diluted in cool tap water (one part composition in 100 parts by weight water) to provide a lemon-flavored beverage. The solid particles suspended in the non-aqueous liquid completely dissolved in the tap water upon hand stirring with a spoon and the non-aqueous liquid formed an oil-in-water dispersion to provide a cloudy beverage with fresh lemon flavor and aroma.

### Example 7. Solubility of Sucralose in Non-Aqueous Concentrates

Acidified, non-aqueous, fluid, flavoring composition A (100%/wit) was prepared by adding solid high-intensity sweetener (sucralose; 14%/wt), solid acidulant (citric acid; 25%/wt), and liquid lemon flavor (carat 1%/wt) to NAL (1,3-propanediol; 60%/wt) in a beaker and then mixing using a rotor-stator mixer (Heidolph Silent Crusher-M at 50,000 rpm) to grind and dissolve the sucralose and citric acid to obtain a clear solution.

Acidified, non-aqueous fluid flavoring composition B (100%/wt) was prepared by adding sucralose (14%/wt), citric acid (25%/wt), and citral (1%/wt) to propylene glycol (60%/wt) in a beaker and then mixing using a rotor-stator mixer (Heidolph Silent Crusher-M at 50,000 rpm) to grind and dissolve the sucralose and citric acid to obtain a clear solution.

Both compositions were stored for 14 days at 22° C. in capped glass vials under an air headspace. Upon visual inspection after storage, composition B contained visible, large, thin crystals, believed to be sucralose, while composition A remained completely clear with no visible crystals. This example demonstrates that NALs can be selected based on their ability to keep specific substances dissolved for extended time periods.

### Example 8. Formation of Non-Aqueous Concentrate in the Form of an Emulsion

Acidified, non-aqueous fluid flavoring composition A (100%/wt) was prepared by adding liquid lemon flavor (citral; 20%/wt), solid acidulant (citric acid; 15%/wt), and liquid surfactant (polysorbate 80; 0.5%/wt) to NAL (1,3-propanediol; 64.5%/wt) in a beaker and then mixing using a rotor-stator mixer (Heidolph Silent Crusher-M at 50,000 rpm) obtain an opaque fluid of small surfactant-stabilized emulsified citral droplets suspended in a solution of citric acid dissolved in NAL.

Acidified, non-aqueous fluid flavoring composition B (100%/wt) was prepared by adding citral (20%/wt), citric acid (15%/wt), and polysorbate 80 (0.5%/wt) to propylene glycol (64.5%/wt) in a beaker and then mixing using a rotor-stator mixer (Heidolph Silent Crushes-M at 50,000 rpm). The resulting composition was a homogeneous solution because citral completely dissolved, along with the other components, in propylene glycol without forming an emulsion.

Composition A demonstrates that 1,3-prapanediol can be used to create an emulsion in at least some instances where use of propylene glycol or other NAL does not enable or facilitate formation of an emulsion. The emulsion of composition A may optionally be even further stabilized by adding a viscosity-increasing agent, such as carboxymethyl cellulose or other hydrocolloid, in an effective amount to the composition during preparation.

### Example 9. Preparation of a Non-Aqueous Concentrate in the Form of an Emulsion

An acidified, non-aqueous fluid flavoring composition (100%/wt) was prepared by adding liquid lemon flavor (citral; 1%/wt), solid acidulant (citric acid; 15%/wt), liquid vegetable oil (soybean; 20%/wt), and liquid surfactant (polysorbate 80; 0.5%/wt) to NAL (propylene glycol,; 63.5%/wt) in a beaker and then mixing using a rotor-stator mixer (Heidolph Silent Crusher-M at 50,000 rpm) to obtain an opaque fluid with small surfactant-stabilized emulsified oil droplets suspended in a solution of citric acid and citral dissolved in NAL. The emulsion may optionally be even further stabilized by adding a viscosity-increasing agent, such as carboxymethyl cellulose or other hydrocolloid, in an effective amount to the composition during preparation. This general approach can be utilized to beneficially form emulsions of other NAL-immiscible liquids, and/or water-immiscible liquids, such as vitamin E.

### Example 10. Sodium Lactate (stability in 1,3-propanediol-based beverage concentrate)

Acidified non-aqueous fluid flavoring composition A (100%/wt) was prepared by adding liquid lemon flavor (citral; 1%/wt), solid acidulant (citric acid; 20%/wt), and solid salt (sodium lactate; 15%/wt) to NAL (propylene glycol; 64%/wt) in a beaker followed by sonication in a sonic water bath (Branson 2200) effective to completely dissolve the citral and solids in NAL to obtain a clear solution.

Acidified low-water fluid flavoring composition B (100%/wt) was prepared by adding citral (1%/wt), citric acid (20%/wt) and sodium lactate (15%/wt) to a solution of water (5%/wt) dissolved in propylene glycol (59%/wt) in a beaker followed by sonication in sonic water bath (Branson 2200) effective to completely dissolve the citral and solids to obtain a clear solution.

Both compositions A and B were stored for 24 hours at 22°C in capped glass vials under an air headspace. Upon visual inspection after storage, composition A was still completely clear, while composition B was almost completely solidified as a result of the formation, during storage, of an insoluble white precipitate of unknown composition. This example also demonstrates that the stability of certain ingredients, such as salts, in liquid beverage concentrates may benefit from minimal inclusion of water, particularly if the concentrates are stored for some time before use.

### Example 11. Potassium Chloride (stability in propylene glycol-based beverage concentrate)

An acidified non-aqueous concentrate (100%/wt) was prepared by adding liquid lemon flavor (citral; 0.5%/wt), solid acidulant (citric acid; 15%/wt), and solid mineral salt (potassium chloride; 3%/wt) to NAL (propylene glycol; 81.5%/wt) in a beaker and then mixing using a rotor-stator mixer (Heidolph Silent Crusher-M at 50,000 rpm) to grind and dissolve the solids and citral to obtain a clear solution. The concentrate was then stored for five days at 25°C in a capped glass vial under an air headspace. Even after five days of storage, the beverage concentrate remained clear without any visible formation of potassium chloride or other crystals. This demonstrates the ability to formulate a liquid beverage concentrate comprising a dissolved mineral salt in a non-aqueous liquid.

The foregoing descriptions are not intended to represent the only forms of the concentrates in regard to the details of formulation. The percentages provided herein are by weight unless stated otherwise. Changes in form and in proportion of parts, as well as the substitution of equivalents, are contemplated as circumstances may suggest or render expedient. Similarly, while beverage concentrates and methods have been described herein in conjunction with specific embodiments, many alternatives, modifications, and variations will be apparent to those skilled in the art in light of the foregoing description.

## Claims

1. A flavored liquid beverage concentrate having a low water content, the concentrate comprising:
5 to 50 weight percent acidulant;
0.5 to 40 weight percent flavoring;
0 to 30 weight percent water; and
non-aqueous liquid in an amount effective to provide a total non-aqueous liquid content of 20 to 94.5 percent by weight of the concentrate,
the amount of acidulant and flavoring included at a ratio by weight of at least 0.1:1, and for concentrates containing water, the acidulant and water are included in a ratio by weight of at least 0.25:1, and the flavored liquid beverage concentrate containing less dissociated acid and retaining more flavor than an otherwise identical concentrate including water instead of non-aqueous liquid after storage in a closed container at room temperature for at least three months.

2. The flavored liquid beverage concentrate according to claim 1, wherein the non-aqueous liquid is selected from the group consisting of propylene glycol, glycerol, ethanol, triacetin, ethyl acetate, benzyl alcohol, vegetable oil, isopropanol, 1, 3-propanediol, and combinations thereof.

3. The flavored liquid beverage concentrate according to claim 1 or claim 2, wherein the acidulant is selected from the group consisting of citric acid, malic acid, succinic acid, acetic acid, hydrochloric acid, adipic acid, tartaric acid, fumaric acid, phosphoric acid, lactic acid, salts thereof and combinations thereof.

4. The flavored liquid beverage concentrate according to any of claims 1 to 3, wherein the acidulant and water are included in a ratio by weight of at least 0.5:1, preferably in a ratio by weight of at least 1:1, more preferably in a ratio by weight of at least 2:1.

5. The flavored liquid beverage concentrate according to any of claims 1 to 4, wherein the concentrate is in the form of a suspension.

6. The flavored liquid beverage concentrate according to any of claims 1 to 5, wherein the concentrate is in the form of a solution and the acidulant is dissolved in the non-aqueous liquid.

7. The flavored liquid beverage concentrate according to any of claims 1 to 6, wherein concentrate has a water activity of less than 0.6.

8. The flavored liquid beverage concentrate according to any of claims 1 to 7, wherein the concentrate includes less than 20 weight percent water, preferably less than 15 weight percent water, more preferably less than 10 percent water.

9. The flavored liquid beverage concentrate according to claim 1, wherein the concentrate includes between 15 to 30 weight percent water and further comprises 0.5 to 10.0 weight percent buffer.

10. The flavored liquid beverage concentrate according to any of 1 to 9, wherein the concentrate has a concentration such that when diluted with a potable liquid at a ratio by weight of 1:75 to 1:160 to provide a beverage, the concentrate delivers 0.01 to 0.8 weight percent acid by weight of the beverage.

11. A flavored liquid beverage concentrate according to claim 1, wherein the concentrate comprises:
less than 5 weight percent water.

12. The flavored liquid beverage concentrate according to claim 11, wherein the concentrate includes a total content of non-aqueous liquid of 35 to 80 percent by weight of the concentrate.

13. The flavored liquid beverage concentrate according to claim 11 or claim 12, wherein the concentrate includes less than 1 weight percent water, preferably less than 0.5 weight percent water.

14. The flavored liquid beverage concentrate according to any of claims 1 to 6 and 11 to 13, wherein the flavoring includes a flavor key, and the acidulant and flavor key are provided in a ratio by weight of 1:2 to 10,000:1, preferably in a ratio by weight of 1:1 to 4000:1.

## Patentansprüche

1. Aromatisiertes flüssiges Getränkekonzentrat mit einem niedrigen Wassergehalt, wobei das Konzentrat umfasst:
5 bis 50 Gew.-% Säuerungsmittel;
0,5 bis 40 Gew.-% Aromastoff;
0 bis 30 Gew.-% Wasser; und
nicht-wässrige Flüssigkeit in einer Menge, die wirksam ist, einen Gesamtgehalt an nicht-wässriger Flüssigkeit von 20 bis 94,5 Gew.-% des Konzentrats bereitzustellen,
die Menge an Säuerungsmittel und Aromastoff in einem Gewichtsverhältnis von mindestens 0,1:1 beinhaltet ist, und für Wasser enthaltende Konzentrate das Säuerungsmittel und Wasser in einem Gewichtsverhältnis von mindestens 0,25:1 beinhaltet sind, und das aromatisierte flüssige Getränkekonzentrat nach Lagerung in einem geschlossenen Behältnis bei Raumtemperatur für mindestens drei Monate weniger dissoziierte Säure enthält und mehr Aroma beibehält als ein ansonsten identisches Konzentrat, welches Wasser an Stelle von nicht-wässriger Flüssigkeit beinhaltet.

2. Aromatisiertes flüssiges Getränkekonzentrat nach Anspruch 1, wobei die nicht-wässrige Flüssigkeit ausgewählt ist aus der Gruppe, bestehend aus Propylenglykol, Glycerin, Ethanol, Triacetin, Ethylacetat, Benzylalkohol, Pflanzenöl, Isopropanol, 1,3-Propandiol und Kombinationen davon.

3. Aromatisiertes flüssiges Getränkekonzentrat nach Anspruch 1 oder Anspruch 2, wobei das Säuerungsmittel ausgewählt ist aus der Gruppe, bestehend aus Zitronensäure, Äpfelsäure, Bernsteinsäure, Essigsäure, Salzsäure, Adipinsäure, Weinsäure, Fumarsäure, Phosphorsäure, Milchsäure, Salzen davon und Kombinationen davon.

4. Aromatisiertes flüssiges Getränkekonzentrat nach einem der Ansprüche 1 bis 3, wobei das Säuerungsmittel und Wasser in einem Gewichtsverhältnis von mindestens 0,5:1, bevorzugt in einem Gewichtsverhältnis von mindestens 1:1, stärker bevorzugt in einem Gewichtsverhältnis von mindestens 2:1 beinhaltet sind.

5. Aromatisiertes flüssiges Getränkekonzentrat nach einem der Ansprüche 1 bis 4, wobei das Konzentrat in Form einer Suspension vorliegt.

6. Aromatisiertes flüssiges Getränkekonzentrat nach einem der Ansprüche 1 bis 5, wobei das Konzentrat in Form einer Lösung vorliegt und das Säuerungsmittel in der nicht-wässrigen Flüssigkeit gelöst ist.

7. Aromatisiertes flüssiges Getränkekonzentrat nach einem der Ansprüche 1 bis 6, wobei das Konzentrat eine Wasseraktivität von weniger als 0,6 aufweist.

8. Aromatisiertes flüssiges Getränkekonzentrat nach einem der Ansprüche 1 bis 7, wobei das Konzentrat weniger als 20 Gew.-% Wasser, bevorzugt weniger als 15 Gew.-% Wasser, stärker bevorzugt weniger als 10 Prozent Wasser beinhaltet.

9. Aromatisiertes flüssiges Getränkekonzentrat nach Anspruch 1, wobei das Konzentrat zwischen 15 und 30 Gew.-% Wasser beinhaltet und weiterhin 0,5 bis 10,0 Gew.-% Puffer umfasst.

10. Aromatisiertes flüssiges Getränkekonzentrat nach einem der Ansprüche 1 bis 9, wobei das Konzentrat eine Konzentration aufweist, so dass das Konzentrat 0,01 bis 0,8 Gew.-% Säure nach Gewicht des Getränks liefert, wenn es mit einer trinkbaren Flüssigkeit in einem Gewichtsverhältnis von 1:75 bis 1:160 verdünnt wird, um ein Getränk herzustellen.

11. Aromatisiertes flüssiges Getränkekonzentrat nach Anspruch 1, wobei das Konzentrat umfasst:
weniger als 5 Gew.-% Wasser

12. Aromatisiertes flüssiges Getränkekonzentrat nach Anspruch 11, wobei das Konzentrat einen Gesamtgehalt von nicht-wässriger Flüssigkeit von 35 bis 80 Gew.-% des Konzentrats beinhaltet.

13. Aromatisiertes flüssiges Getränkekonzentrat nach Anspruch 11 oder 12, wobei das Konzentrat weniger als 1 Gew..-%, bevorzugt weniger als 0,5 Gew.-% Wasser beinhaltet.

14. Aromatisiertes flüssiges Getränkekonzentrat nach einem der Ansprüche 1 bis 6 und 11 bis 13, wobei der Aromastoff einen Aromaschlüssel beinhaltet, und das Säuerungsmittel und der Aromaschlüssel in einem Gewichtsverhältnis von 1:2 bis 10.000:1 bereitgestellt werden, bevorzugt in einem Gewichtsverhältnis von 1:1 bis 4000:1.

## Revendications

1. Concentré de boisson liquide aromatisée ayant une faible teneur en eau, le concentré comprenant :
5 à 50 pour cent en poids d'acidulant ;
0,5 à 40 pour cent en poids d'aromatisant ;
0 à 30 pour cent en poids d'eau ; et
un liquide non aqueux en une quantité efficace pour fournir une teneur totale en liquide non aqueux allant de 20 à 94,5 pour cent en poids du concentré,
la quantité d'acidulant et d'aromatisant inclus à un rapport en poids d'au moins 0,1:1, et pour des concentrés contenant de l'eau, l'acidulant et l'eau sont inclus à un rapport en poids d'au moins 0,25:1, et le concentré de boisson liquide aromatisée contenant un acide moins dissocié et conservant plus de saveur qu'un autre concentré identique comportant de l'eau à la place d'un liquide non aqueux après stockage dans un récipient fermé à température ambiante pendant au moins trois mois.

2. Concentré de boisson liquide aromatisée selon la revendication 1, dans lequel le liquide non aqueux est choisi dans le groupe constitué de propylène glycol, de glycérol, d'éthanol, de triacétine, d'acétate d'éthyle, d'alcool benzylique, d'huile végétale, d'isopropanol, de 1, 3-propanediol, et de combinaisons de ceux-ci.

3. Concentré de boisson liquide aromatisée selon la revendication 1 ou 2, dans lequel l'acidulant est choisi dans le groupe constitué d'acide citrique, d'acide malique, d'acide succinique, d'acide acétique, d'acide chlorhydrique, d'acide adipique, d'acide tartrique, d'acide fumarique, d'acide phosphorique, d'acide lactique, de sels de ceux-ci et de combinaisons de ceux-ci.

4. Boisson liquide aromatisée concentrée selon l'une des revendications 1 à 3, dans laquelle l'acidulant et l'eau sont inclus à un rapport en poids d' au moins 0,5:1, de préférence à un rapport en poids d'au moins 1:1, plus préférablement à un rapport en poids d'au moins 2:1.

5. Concentré de boisson liquide aromatisée selon l'une des revendications 1 à 4, dans lequel le concentré est sous forme d'une suspension.

6. Concentré de boisson liquide aromatisée selon l'une des revendications 1 à 5, dans lequel le concentré est sous forme d'une solution et l'acidulant est dissous dans le liquide non aqueux.

7. Concentré de boisson liquide aromatisée selon l'une des revendications 1 à 6, dans lequel le concentré a une activité de l'eau inférieure à 0,6.

8. Concentré de boisson liquide aromatisée selon l'une des revendications 1 à 7, dans lequel le concentré comporte moins de 20 pour cent en poids d'eau, de préférence moins de 15 pour cent en poids d'eau, plus préférablement moins de 10 pour cent d'eau.

9. Concentré de boisson liquide aromatisée selon la revendication 1, dans lequel le concentré comporte entre 15 et 30 pour cent en poids d'eau et comprend en outre de 0,5 à 10,0 pour cent en poids de tampon.

10. Concentré de boisson liquide aromatisée selon l'une des revendications 1 à 9, dans lequel le concentré a une concentration telle que, lorsqu'il est dilué avec un liquide potable à un rapport en poids allant de 1:75 à 1:160 pour fournir une boisson, le concentré fournit 0,01 à 0,8 pour cent en poids d'acide en poids de la boisson.

11. Concentré de boisson liquide aromatisée selon la revendication 1, dans lequel le concentré comprend :
moins de 5 pour cent en poids d'eau.

12. Concentré de boisson liquide aromatisée selon la revendication 11, dans lequel le concentré comporte une teneur totale en liquide non aqueux allant de 35 à 80 pour cent en poids du concentré.

13. Concentré de boisson liquide aromatisée selon la revendication 11 ou 12, dans lequel le concentré comporte moins de 1 pour cent en poids d'eau, de préférence moins de 0,5 pour cent en poids d'eau.

14. Concentré de boisson liquide aromatisée selon l'une des revendications 1 à 6 et 11 à 13, dans lequel l'aromatisant comporte un élément aromatisant essentiel, et l'acidulant et l'élément aromatisant essentiel sont fournis à un rapport en poids allant de 1:2 à 10 000:1, de préférence à un rapport en poids allant de 1:1 à 4000:1.
